# EUROPEAN PATENT SPECIFICATION

(11) **EP 2 942 377 B1**
(45) Date of publication and mention of the grant of the patent: **27.03.2019**
(21) Application number: 13870033.1
(22) Date of filing: 17.12.2013
(51) Int. Cl.: C09D 11/00, B41J 2/01, B41M 5/00, C09D 11/328, C09D 11/38

(54) **INKJET RECORDING INK AND RECORDING**
TINTENSTRAHLAUFZEICHNUNGSTINTE UND AUFZEICHNUNG
ENCRE POUR ENREGISTREUR À JET D'ENCRE ET ENREGISTREMENT

(30) Priority: 07.01.2013 JP 2013000366
(43) Date of publication of application: 11.11.2015
(73) Proprietor: Seiko Epson Corporation, Shinjuku-ku Tokyo 160-0811 (JP)
(72) Inventor: NUMAKURA, Kenichi, Suwa-shi Nagano 392-8502 (JP); IIDA, Keiji, Suwa-shi Nagano 392-8502 (JP); IKEDA, Yasunari, Suwa-shi Nagano 392-8502 (JP); TAKAHASHI, Hiroshi, Suwa-shi Nagano 392-8502 (JP); NAITO, Shinichi, Suwa-shi Nagano 392-8502 (JP)
(74) Representative: Miller Sturt Kenyon
(86) International application number: PCT/JP2013/083780
(87) International publication number: WO 2014/106926

(56) References cited:
- EP-A1- 2 390 288
- EP-A1- 2 918 645
- JP-A- H0 641 878
- JP-A- 2000 239 979
- JP-A- 2003 238 851
- JP-A- 2004 107 647
- JP-A- 2011 021 133
- US-A1- 2009 113 641

## Description

### TECHNICAL FIELD

The present invention relates to an inkjet recording ink and a recorded matter.

### BACKGROUND ART

A fabric cloth and the like have been generally dyed using a sublimation transfer technique. For example, a sheet-like intermediate transfer medium (e.g., paper) is subjected to inkjet printing, and placed on the dyeing target (e.g., fabric cloth), followed by heating to effect sublimation transfer. Alternatively, an ink-receiving layer that is removably provided to the dyeing target (e.g., film product) is subjected to inkjet printing, and the dyeing target is heated to effect sublimation-diffusion dyeing, followed by removal of the ink-receiving layer. An ink that includes a disperse dye (sublimation dye) is used for these dyeing methods.

Such an ink normally includes water in addition to the disperse dye. JP-A-2004-42604 discloses a technique that further utilizes glycerol in order to prevent the nozzle of the inkjet head from being clogged (i.e., ensure ejection stability). An inkjet recording device that is used to eject an ink normally includes a member that includes a silicone rubber as a member with which the ink comes in contact.

When a known ink that includes a disperse dye is used for an inkjet recording device that includes a member that includes a silicone rubber, the dispersion state of the disperse dye may be impaired when the ink has come in contact with the silicone rubber, and the disperse dye may aggregate, for example. When the disperse dye has aggregated, for example, the nozzle of the inkjet head may be clogged, and it may be difficult to eject the ink in a stable manner.

### SUMMARY OF INVENTION

### TECHNICAL PROBLEM

An object of the invention is to provide an inkjet recording ink that exhibits excellent storage stability, and exhibits excellent ejection stability when used for an inkjet method, and a recorded matter produced using the inkjet recording ink.

### SOLUTION TO PROBLEM

An aspect of the invention can achieve the above object (see below). According to one aspect of the invention, an inkjet recording ink is used for an inkjet recording device that includes a silicone rubber having a solubility parameter at 25°C of 6 to 8 as a member with which an ink comes in contact, the inkjet recording ink comprising: water; a disperse dye; and an anionic surfactant, a content X (mass%) of the disperse dye and a content Y (mass%) of the anionic surfactant in the inkjet recording ink satisfying a relationship "Y/X≥0.7".

This makes it possible to ensure that the inkjet recording ink exhibits excellent storage stability, and more effectively prevent a situation in which the dispersion state of the disperse dye is impaired when the inkjet recording ink has come in contact with the silicone rubber. It is thus possible to provide an inkjet recording ink that exhibits excellent ejection stability when used for an inkjet method. It is also possible to improve the dispersion stability of the disperse dye, and provide an inkjet recording ink that exhibits excellent storage stability.

It is preferable that the content X (mass%) of the disperse dye and the content Y (mass%) of the anionic surfactant in the inkjet recording ink satisfy a relationship "Y/X≥1.0". In this case, it is possible to more effectively prevent a situation in which the dispersion state of the disperse dye is impaired when the inkjet recording ink has come in contact with the silicone rubber.

It is preferable that the anionic surfactant be an aromatic sulfonic acid-formalin condensate. In this case, it is possible to further improve the dispersion stability of the disperse dye, and more reliably prevent a situation in which the dispersion state of the disperse dye is impaired when the inkjet recording ink has come in contact with a silicone rubber. It is also possible to further improve the storage stability of the inkjet recording ink.

It is preferable that the inkjet recording ink further comprises a silicon-based surfactant. In this case, it is possible to further improve the dispersion stability of the disperse dye, and more reliably prevent a situation in which the dispersion state of the disperse dye is impaired when the inkjet recording ink has come in contact with a silicone rubber. It is also possible to further improve the storage stability of the inkjet recording ink.

It is preferable that the content of the disperse dye in the inkjet recording ink be 1 to 15 mass%. This ensures that the inkjet recording ink exhibits excellent ejection stability while ensuring that the recorded image produces an excellent color. It is preferable that the content of the anionic surfactant in the inkjet recording ink be 1 to 45 mass%. In this case, it is possible to more efficiently improve the dispersion stability of the disperse dye.

It is preferable that the inkjet recording ink further comprises a silicon-based surfactant, and the content of the silicon-based surfactant in the inkjet recording ink be 0.1 to 5 mass%. In this case, it is possible to more efficiently improve the dispersion stability of the disperse dye.

Further preferable features are set out in claims 8 and 9.

### BRIEF DESCRIPTION OF DRAWINGS

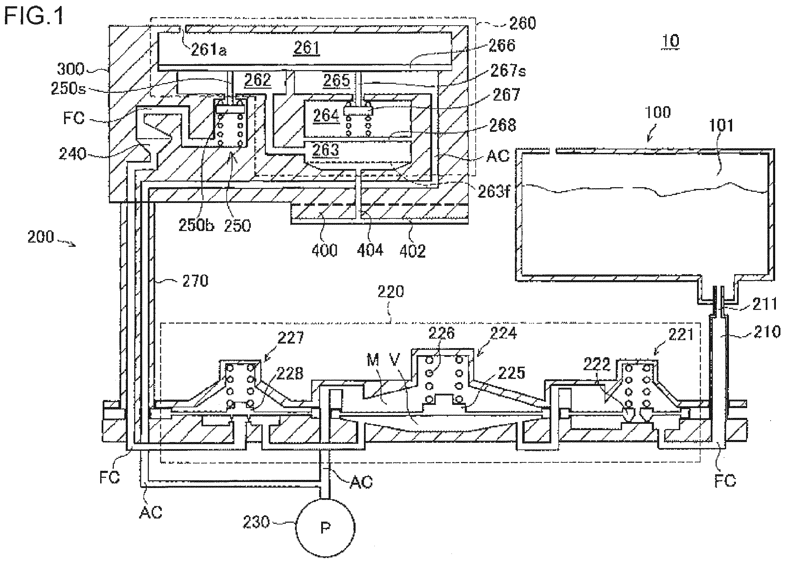

FIG. 1 illustrates a schematic configuration of an inkjet recording device.

### DESCRIPTION OF EMBODIMENTS

Exemplary embodiments of the invention are described in detail below.

### Inkjet recording ink

An inkjet recording ink according to one embodiment of the invention is described below. The inkjet recording ink according to one embodiment of the invention is used for an inkjet recording device that includes a silicone rubber having a solubility parameter at 25°C of 6 to 8 as a member with which the ink comes in contact.

The inkjet recording ink according to one embodiment of the invention includes water, a disperse dye, and an anionic surfactant. An inkjet recording device that is used to eject an ink normally includes a member that includes a silicone rubber as a member with which the ink comes in contact. When a known inkjet recording ink that includes a disperse dye is used for an inkjet recording device that includes a member that includes a silicone rubber, the dispersion state of the disperse dye may be impaired when the inkjet recording ink has come in contact with the silicone rubber, and the disperse dye may aggregate, for example. In particular, the disperse dye may significantly aggregate when the inkjet recording ink has come in contact with a silicone rubber having a solubility parameter at 25°C of 6 to 8. When the disperse dye has aggregated, for example, the nozzle of the inkjet head may be clogged, and it may be difficult to eject the ink in a stable manner.

The inventors of the invention conducted extensive studies in order to prevent the above problem. The invention described in detail below was conceived as a result of these extensive studies. Specifically, the inkjet recording ink according to one embodiment of the invention includes water, a disperse dye, and an anionic surfactant, the content X (mass%) of the disperse dye and the content Y (mass%) of the anionic surfactant in the inkjet recording ink satisfying the relationship "Y/X≥0.7". This makes it possible to reliably prevent the above problem. Specifically, it is possible to effectively prevent a situation in which the dispersion state of the disperse dye is impaired when the inkjet recording ink has come in contact with the silicone rubber, and the disperse dye aggregates. This makes it possible to provide an inkjet recording ink that exhibits excellent ejection stability when used for an inkjet method. It is also possible to improve the dispersion stability of the disperse dye, and provide an inkjet recording ink that exhibits excellent storage stability.

The content X (mass%) of the disperse dye and the content Y (mass%) of the anionic surfactant in the inkjet recording ink satisfy the relationship "Y/X≥0.7". It is preferable that the content X (mass%) of the disperse dye and the content Y (mass%) of the anionic surfactant in the inkjet recording ink satisfy the relationship "Y/X≥1.0". This makes it possible to more effectively prevent a situation in which the dispersion state of the disperse dye is impaired when the inkjet recording ink has come in contact with the silicone rubber. Note that the term "solubility parameter (SP value)" used herein refers to a value calculated from the energy of vaporization (evaporation) and the molar volume with respect to an atom and an atomic group (see "Hansen Solubility Parameters: A User's Handbook").

Each component included in the inkjet recording ink according to one embodiment of the invention is described below.

### <Water>

The inkjet recording ink according to one embodiment of the invention includes water. Water included in the inkjet recording ink functions as a dispersion medium in which the disperse dye (described in detail later) is dispersed. When the inkjet recording ink includes water, the viscosity and the surface tension of the inkjet recording ink can be adjusted to be included within preferable ranges, and the inkjet recording ink exhibits an excellent ejection capability when used for an inkjet method. Since water can be easily removed after the inkjet recording ink has been ejected using an inkjet method, the productivity of the recorded matter can be improved. Since water is highly safe to the human body and the like, it is possible to ensure safety to a worker during production of a dyed product. The content of water in the inkjet recording ink is not particularly limited, but is preferably 50 to 90 mass%, and more preferably 55 to 70 mass%.

### <Disperse dye>

The inkjet recording ink according to one embodiment of the invention includes the disperse dye. The disperse dye is a dye that sublimes due to heating. Examples of the disperse dye include C.I. Disperse Yellow 3, 7, 8, 23, 39, 51, 54, 60, 71, and 86; C.I. Disperse Orange 1, 1:1, 5, 20, 25, 25:1, 33, 56, and 76; C.I. Disperse Brown 2; C.I. Disperse Red 11, 50, 53, 55, 55:1, 59, 60, 65, 70, 75, 93, 146, 158, 190, 190:1, 207, 239, and 240; C.I. Vat Red 41; C.I. Disperse Violet 8, 17, 23, 27, 28, 29, 36, and 57; C.I. Disperse Blue 19, 26, 26:1, 35, 55, 56, 58, 64, 64:1, 72, 72:1, 81, 81:1, 91, 95, 108, 131, 141, 145, and 359; and the like. These disperse dyes may be used either alone or in combination.

Among these, C.I. Disperse Yellow 3, 7, 8, 23, 51, 54, 60, 71, and 86; C.I. Disperse Orange 20, 25, 25:1, 56, and 76; C.I. Disperse Brown 2; C.I. Disperse Red 11, 53, 55, 55:1, 59, 60, 65, 70, 75, 146, 190, 190:1, 207, 239, and 240; C.I. Vat Red 41; C.I. Disperse Violet 8, 17, 23, 27, 28, 29, 36, and 57; C.I. Disperse Blue 26, 26:1, 55, 56, 58, 64, 64:1, 72, 72:1, 81, 81:1, 91, 95, 108, 131, 141, 145, and 359; and the like are preferable from the viewpoint of the storage stability of the inkjet recording ink.

It is preferable that the disperse dye have a solubility parameter at 25°C of 7.5 to 10.5. This makes it possible to effectively prevent a situation in which the disperse dye aggregates when the inkjet recording ink has come in contact with a silicone rubber having a solubility parameter at 25°C of 6 to 8. The molecular weight of the disperse dye is not particularly limited. The disperse dye may preferably be used for sublimation printing when the molecular weight of the disperse dye is 550 or less.

The disperse dye preferably has a vaporization (evaporation) rate of 1×10⁴ g/m²-sec or more when heated to 200°C in air. This ensures that the recorded image produces an excellent color. The disperse dye preferably has a residual ratio of 0.1 wt% or less when heated to 200°C in air. This also ensures that the recorded image produces an excellent color. The content of the disperse dye in the inkjet recording ink is not particularly limited, but is preferably 1 to 20 mass%, and more preferably 1 to 15 mass%. This ensures that the inkjet recording ink exhibits excellent ejection stability while ensuring that the recorded image produces an excellent color.

### <Anionic surfactant>

The inkjet recording ink according to one embodiment of the invention includes the anionic surfactant. The anionic surfactant improves the dispersion stability of the disperse dye. Examples of the anionic surfactant include an aromatic sulfonic acid-formalin condensate, a beta-naphthalenesulfonic acid-formalin condensate, an alkylnaphthalenesulfonic acid-formalin condensate, a creosote oil sulfonic acid-formalin condensate, and the like. These anionic surfactants may be used either alone or in combination.

It is preferable to use the aromatic sulfonic acid-formalin condensate as the anionic surfactant. This makes it possible to further improve the dispersion stability of the disperse dye, and more reliably prevent a situation in which the dispersion state of the disperse dye is impaired when a silicone rubber has come in contact with the inkjet recording ink. Examples of the aromatic sulfonic acid that forms the aromatic sulfonic acid-formalin condensate include creosote oil sulfonic acid, cresolsulfonic acid, phenolsulfonic acid, beta-naphtholsulfonic acid, an alkylnaphthalene sulfonic acid such as methylnaphthalenesulfonic acid and butylnaphthalenesulfonic acid, a mixture of beta-naphthalenesulfonic acid and beta-naphtholsulfonic acid, a mixture of cresolsulfonic acid and 2-naphthol-6-sulfonic acid, lignosulfonic acid, and the like. The content of the anionic surfactant in the inkjet recording ink is not particularly limited, but is preferably 1 to 60 mass%, and more preferably 1 to 45 mass%. In this case, it is possible to more efficiently improve the dispersion stability of the disperse dye, and further improve the storage stability of the inkjet recording ink.

### <Additional component>

The inkjet recording ink according to one embodiment of the invention may include a component (additional component) other than the above components. Examples of the additional component include a surfactant (dispersant, antifoaming agent, or surface tension regulator) other than an anionic surfactant, a solvent, an antiseptic-antifungal agent, a pH-adjusting agent, a chelating reagent, a rust preventive, a UV absorber, and the like.

Examples of the surfactant other than an anionic surfactant include a nonionic dispersant, a cationic surfactant, a polymer dispersant, and the like. It is preferable to use a nonionic dispersant. A silicon-based surfactant is preferable as the nonionic dispersant. In this case, it is possible to further improve the dispersion stability of the disperse dye, and more reliably prevent a situation in which the dispersion state of the disperse dye is impaired when the inkjet recording ink has come in contact with a silicone rubber. It is also possible to further improve the storage stability of the inkjet recording ink, and improve droplet ejection response when using an inkjet method.

When the inkjet recording ink includes a silicon-based surfactant as the nonionic dispersant, the content of the silicon-based surfactant in the inkjet recording ink is preferably 0.1 to 10 mass%, and more preferably 0.1 to 5 mass%. In this case, it is possible to more efficiently improve the dispersion stability of the disperse dye, and further improve the storage stability of the inkjet recording ink. Examples of the polymer dispersant include a partial alkyl ester of polyacrylic acid, a polyalkylenepolyamine, a polyacrylic acid salt, a styrene-acrylic acid copolymer, a vinylnaphthalene-maleic acid copolymer, and the like. The inkjet recording ink according to one embodiment of the invention may include a surfactant other than those described above. Examples of the solvent include a polyol compound, a glycol ether, and the like.

Examples of the polyol compound include a polyol compound (preferably a diol compound) having 2 to 6 carbon atoms that may include one ether linkage in the molecule, and the like. Specific examples of the polyol compound include glycerol, ethylene glycol, diethylene glycol, triethylene glycol, propylene glycol, dipropylene glycol, 1,3-propanediol, 1,2-butanediol, 1,3-butanediol, 1,4-butanediol, 2,3-butanediol, 3-methyl-1,3-butanediol, 1,2-pentanediol, 1,5-pentanediol, 2-methyl-2,4-pentanediol, 3-methyl-1,5-pentanediol, 1,2-hexanediol, 1,6-hexanediol, and the like.

Examples of a preferable glycol ether include a monoalkyl ether of a glycol selected from ethylene glycol, diethylene glycol, triethylene glycol, propylene glycol, dipropylene glycol, and tripropylene glycol. Specific examples of a preferable glycol ether include triethylene glycol monomethyl ether, triethylene glycol monobutyl ether, dipropylene glycol monopropyl ether, and the like.

Examples of the antiseptic-antifungal agent include an organic sulfur-based compound, an organic nitrogen-sulfur-based compound, an organic halogen-based compound, a haloallylsulfone-based compound, an iodopropagyl-based compound, an N-haloalkylthio-based compound, a benzothiazole-based compound, a nitrile-based compound, a pyridine-based compound, an 8-oxyquinoline-based compound, an isothiazoline-based compound, a dithiol-based compound, a pyridine oxide-based compound, a nitropropane-based compound, an organic tin-based compound, a phenol-based compound, a quaternary ammonium salt-based compound, a triazine-based compound, a thiadiazine-based compound, an anilide-based compound, an adamantane-based compound, a dithiocarbamate-based compound, a brominated indanone-based compound, a benzyl bromoacetate-based compound, an inorganic salt-based compound, and the like. Examples of the organic halogen-based compound include sodium pentachlorophenol and the like. Examples of the pyridine oxide-based compound include sodium pyridinethione-1-oxide, zinc pyridinethione-1-oxide, and the like. Examples of the isothiazoline-based compound include an amine salt of 1-benzisothiazolin-3-one, 1,2-benzisothiazolin-3-one, 2-n-octyl-4-isothiazolin-3-one, 5-chloro-2-methyl-4-isothiazolin-3-one, 5-chloro-2-methyl-4-isothiazolin-3-one magnesium chloride, 5-chloro-2-methyl-4-isothiazolin-3-one calcium chloride, 2-methyl-4-isothiazolin-3-one calcium chloride, and the like. Further examples of the antiseptic-antifungal agent include sodium dehydroacetate, sodium sorbate, sodium benzoate, and the like. When the inkjet recording ink includes the pH-adjusting agent, the inkjet recording ink exhibits excellent storage stability, for example. Moreover, the reliability of the recorded matter (dyed product) produced using the inkjet recording ink is improved.

Examples of a preferable pH-adjusting agent include a compound that makes it possible to adjust (control) the pH of the inkjet recording ink to 6.0 to 11.0. Examples of such a pH-adjusting agent include an alkanolamine such as diethanolamine, triethanolamine, dimethylethanolamine, and diethylethanolamine; an alkali metal hydroxide such as lithium hydroxide, sodium hydroxide, potassium hydroxide, and lithium hydroxide; ammonium hydroxide; an alkali metal carbonate such as lithium carbonate, sodium carbonate, and potassium carbonate; an aminosulfonic acid such as taurine; and the like.

Examples of the chelating reagent include disodium ethylenediaminetetraacetate, sodium nitrilotriacetate, sodium hydroxyethylethylenediaminetriacetate, sodium diethylenetriaminepentaacetate, sodium uracildiacetate, and the like. Examples of the rust preventive include an acidic sulfite, sodium thiosulfate, ammonium thioglycolate, diisopropyl ammonium nitrate, pentaerythritol tetranitrate, dicyclohexyl ammonium nitrate, a benzotriazole-based compound, and the like.

Examples of the UV absorber include a benzophenone-based compound, a cinnamic acid-based compound, a triazine-based compound, a stilbene-based compound, a fluorescent whitening agent (i.e., a compound that absorbs UV rays and emits fluorescence (e.g., benzoxazole-based compound)), and the like. It is preferable that the inkjet recording ink according to one embodiment of the invention have a surface tension (surface tension at 25°C) of 20 to 50 mN/m, and more preferably 25 to 40 mN/m. The surface tension of the inkjet recording ink may be measured in accordance with JIS K 3362 using a surface tensiometer ("CBVP-A3" manufactured by Kyowa Interface Science Co., Ltd.), for example.

It is preferable that the inkjet recording ink according to one embodiment of the invention have a viscosity (viscosity at 25°C) of 2 to 20 mPa·s. This ensures that the inkjet recording ink exhibits excellent ejection stability (e.g., the stability of the ejection volume and the travel capability of droplets), excellent ejection response (e.g., response speed and high frequency responsiveness (frequency characteristics)), and the like. The viscosity of the inkjet recording ink may be measured in accordance with JIS Z 8809 using a vibrating viscometer.

### Inkjet recording device

An inkjet recording device to which the inkjet recording ink according to one embodiment of the invention may suitably be applied is described below. FIG. 1 is a view illustrating a schematic configuration of the inkjet recording device. The inkjet recording device 10 illustrated in FIG. 1 is a serial inkjet recording device that can eject a black inkjet recording ink, a cyan inkjet recording ink, a magenta inkjet recording ink, and a yellow inkjet recording ink. The inkjet recording device 10 includes an ink cartridge 100, an ink supply device 200, a carriage 300, and a recording head 400.

The ink cartridge 100 includes one or more ink-holding sections 101, and the ink-holding section 101 holds the inkjet recording ink corresponding to each color. FIG. 1 illustrates an example in which the ink cartridge 100 includes one ink-holding section 101. Note that the inkjet recording device 10 is configured so that one or more ink cartridges 100 corresponding to the four colors are connected to the ink supply device 200.

The inkjet recording device 10 is an off-carriage-type inkjet recording device that is configured so that the ink cartridge 100 is fitted into the main body of the inkjet recording device. The ink cartridge 100 is fitted into the main frame (not illustrated in FIG. 1) of the inkjet recording device 10 using a cartridge holder (not illustrated in FIG. 1). The ink supply device 200 supplies the ink contained in the ink cartridge 100 to the recording head 400. The ink supply device 200 includes a cartridge connection section 210, a flow channel pump section 220, a decompression pump section 230, a filter section 240, a valve unit 250, a decompression-degassing section 260, and a tube 270. The ink supply device 200 is provided corresponding to each color. Each ink supply device 200 has the same configuration. FIG. 1 illustrates one ink supply device 200 that supplies one of the four inks.

The cartridge connection section 210 connects the ink supply device 200 and the ink cartridge 100. The cartridge connection section 210 includes a hollow needle 211. The hollow needle is inserted into the ink cartridge 100 so that the ink-holding section 101 of the ink cartridge 100 communicates with an ink flow channel FC included in the ink supply device 200. The flow channel pump section 220 sucks the ink from the ink cartridge 100, and pumps the ink into the carriage 300. The flow channel pump section 220 includes a suction-side check valve 221, a pump 224, and an ejection-side check valve 227. The suction-side check valve 221, the pump 224, and the ejection-side check valve 227 are sequentially provided along the ink flow channel FC from the side of the ink cartridge 100 (upstream side).

The suction-side check valve 221 is formed so that the ink flow channel FC can be opened and closed by a suction-side valve disc 222, and functions as a one-way valve that allows only movement of the ink from the ink cartridge 100 to the pump 224. The ejection-side check valve 227 is formed so that the ink flow channel FC can be opened and closed by an ejection-side valve disc 228, and functions as a one-way valve that allows only movement of the ink from the pump 224 to the recording head 400.

The pump 224 includes a diaphragm 225 and a spring 226, and pumps the ink from the ink cartridge 100 into the carriage 300. Specifically, the decompression pump section 230 (described later) decompresses an upper space M situated over the diaphragm 225 to warp the diaphragm 225 upward so that the volume of a volume-variable space V that is formed along the ink flow channel FC increases. The pump 224 thus causes the ink to flow from the ink cartridge 100 into the space V through the suction-side check valve 221. When the decompression state of the upper space M has been canceled by the decompression pump section 230, the diaphragm 225 is moved downward by the spring 226 so that the volume of the space V decreases. The pump 224 thus pumps the ink contained in the space V into the recording head 400 by utilizing the biasing force of the spring 226.

The decompression pump section 230 decompresses the upper space M of the pump 224 that communicates with the decompression pump section 230 through an air flow channel AC, and a decompression chamber 265 (described later) of the decompression-degassing section 260. The decompression pump section 230 includes a valve disc (not illustrated in FIG. 1), and cancels the decompression state of the upper space M and the decompression chamber 265 by opening the air flow channel AC to the atmosphere by opening the valve disc. The filter section 240 is provided in the ink flow channel FC at a position between the flow channel pump section 220 and the recording head 400, and filters the ink supplied from the flow channel pump section 220 to the recording head 400 to trap impurities (e.g., dust). The filter section 240 is a characteristic part according to the invention, and the shape and the configuration thereof are described later.

The valve unit 250 is provided in the ink flow channel FC at a position between the filter section 240 and the recording head 400, and formed so that the ink flow channel FC can be opened and closed by a valve disc 250b. When the valve disc 250b is opened, the ink can flow from the filter section 240 into the recording head 400. When the valve disc 250b is closed, the ink cannot flow from the filter section 240 into the recording head 400. The decompression-degassing section 260 is provided in the ink flow channel FC at a position between the valve unit 250 and the recording head 400, and removes air bubbles from the ink. The decompression-degassing section 260 includes an air chamber 261, a pressure chamber 262, a degassing chamber 263, a negative pressure chamber 264, and the decompression chamber 265.

The air chamber 261 communicates with the atmosphere through an air communication hole 261a. The pressure chamber 262 can temporarily hold the ink. The pressure chamber 262 is situated adjacent to the air chamber 261 through a partition wall 266 that includes a film formed of a flexible member, and a cantilever thin plate member that can be displaced together with the film. The pressure chamber 262 communicates with the valve unit 250 and the degassing chamber 263. A rod section 250s of the valve disc 250b of the valve unit 250 is bonded to the partition wall 266 at a position inside the pressure chamber 262, and the valve disc 250b is moved between the open position and the close position due to vertical displacement of the partition wall 266. When the valve disc 250b is opened (i.e., set to the open position), the ink flows into the pressure chamber 262 through the valve unit 250.

The degassing chamber 263 is a hollow chamber that includes a filter 263f, and communicates with the pressure chamber 262 and the recording head 400. The degassing chamber 263 temporarily holds the ink that has flowed into the degassing chamber 263 from the pressure chamber 262, and removes gas from the ink through a degassing operation. The ink held by the degassing chamber 263 is discharged to the recording head 400 through the filter 263f. The filter 263f filters the ink to remove impurities (e.g., dust). The filter 263f rarely allows air bubbles present in the ink flow channel FC to pass through so that air bubbles are trapped in the ceiling part of the degassing chamber 263. Note that the ink discharged from the degassing chamber 263 passes through an ink discharge tube 404 connected to the bottom of the degassing chamber 263, and is ejected from a plurality of nozzles (not illustrated in FIG. 1) provided to a nozzle plate 402. The negative pressure chamber 264 is provided over the degassing chamber 263 through a partition wall 268 that is formed of a synthetic resin material that allows gas to pass through. Examples of the synthetic resin material that allows gas to pass through include polyacetal, polypropylene, polyphenylene ether, and the like. The negative pressure chamber 264 communicates with the decompression chamber 265 through a flow channel valve 267.

The decompression chamber 265 is a hollow chamber that communicates with the decompression pump section 230 through the air flow channel AC. The decompression chamber 265 is situated adjacent to the air chamber 261 through the partition wall 266 in the same manner as the pressure chamber 262. A rod section 267s of the flow channel valve 267 is bonded to the partition wall 266 at a position inside the decompression chamber 265, and the flow channel valve 267 is moved between the open position and the close position due to vertical displacement of the partition wall 266. When the decompression chamber 265 has been decompressed by driving the decompression pump section 230, the partition wall 266 is deformed toward the decompression chamber 265 due to the difference in pressure between the decompression chamber 265 and the air chamber 261. The flow channel valve 267 is thus opened (i.e., moved to the open position), and the negative pressure in the decompression chamber 265 is introduced into the negative pressure chamber 264. When the decompression chamber 265 is opened to the atmosphere by the decompression pump section 230, the flow channel valve 267 is closed (i.e., moved to the close position) due to the biasing force of a spring, and the negative pressure chamber 264 is maintained in a decompressed state. Air bubbles and dissolved air included in the ink held by the degassing chamber 263 are thus collected into the negative pressure chamber 264 through the partition wall 268. The decompression-degassing section 260 thus degases the ink.

The carriage 300 is disposed so that the carriage 300 can reciprocate in the main scan direction along a guide rod (not illustrated in FIG. 1) while receiving power supplied from a carriage motor (not illustrated in FIG. 1). The filter section 240, the valve unit 250, and the decompression-degassing section 260 of the ink supply device 200 are provided to the carriage 300. The tube 270 is disposed between the flow channel pump section 220 and the filter section 240 so that the ink can be supplied from the flow channel pump section 220 to the filter section 240, and the decompression chamber 265 can be decompressed using the decompression pump section 230 even when the carriage 300 is moved. Although an example in which the inkjet recording device 10 is an off-carriage-type inkjet recording device has been described above, the inkjet recording device 10 may be an on-carriage-type inkjet recording device in which the ink cartridge 100 is fitted into the carriage 300.

The recording head 400 is provided at the bottom of the carriage 300, and ejects ink droplets from a plurality of nozzles (not illustrated in FIG. 1) onto a recording medium while the carriage 300 reciprocates in the main scan direction. The recording medium is fed in the sub-scan direction by a paper feed mechanism (not illustrated in FIG. 1), and an image or the like is formed on the recording medium. In the inkjet recording device 10, part or the entirety (or some or all) of the suction-side valve disc 222, the ejection-side check valve 227, the valve unit 250, the flow channel valve 267, and the like are formed using a silicone rubber having a solubility parameter at 25°C of 6 to 8. Examples of the droplet ejection method used for the inkjet recording device 10 include a piezo method, a method that ejects an ink by utilizing bubbles produced by heating the ink, and the like. It is preferable to use a piezo method since the inkjet recording ink rarely changes in properties, for example.

### Method for producing recorded matter

A method for producing a recorded matter using an inkjet recording ink is described below. A method for producing a recorded matter according to one embodiment of the invention includes an ink application step (1a) that applies the inkjet recording ink according to one embodiment of the invention (see above) to an intermediate transfer medium using an inkjet recording device, and a transfer step (1b) that heats the intermediate transfer medium to which the inkjet recording ink has been applied in a state in which the intermediate transfer faces the recording target to transfer the sublimation dye included in the inkjet recording ink to the recording target. This makes it possible to provide a method for producing a recorded matter using an inkjet recording ink that can produce a recorded matter with high productivity.

Each step is described in detail below.

### <Ink application step>

In the ink application step (1a), the inkjet recording ink according to one embodiment of the invention is applied to the intermediate transfer medium using the inkjet recording device. Examples of the intermediate transfer medium include paper (e.g., plain paper), a recording medium provided with an ink-receiving layer (e.g., inkjet paper or coated paper), and the like. It is preferable to use paper that is provided with an ink-receiving layer formed using inorganic microparticles (e.g., silica). In this case, it is possible to obtain an intermediate recorded matter while suppressing a situation in which blurring or the like occurs when the inkjet recording ink applied to the intermediate transfer medium is dried, and ensure that the disperse dye sublimates more smoothly in the subsequent transfer step. A plurality of types of inkjet recording inks may be used in the ink application step. In this case, it is possible to widen the color gamut, for example.

### <Transfer step>

In the transfer step (1b), the intermediate transfer medium to which the inkjet recording ink has been applied is heated in a state in which the intermediate transfer faces the recording target to transfer the disperse dye included in the inkjet recording ink to the recording target. A recorded matter is thus obtained. The heating temperature employed in the transfer step is preferably 160 to 220°C, and more preferably 170 to 200°C. In this case, it is possible to reduce the amount of energy required for transfer, and further improve the productivity of the recorded matter. It is also possible to improve the reliability of the resulting recorded matter.

The heating time employed in the transfer step is determined taking account of the heating temperature, but is preferably 30 to 90 seconds, and more preferably 45 to 60 seconds. In this case, it is possible to reduce the amount of energy required for transfer, and further improve the productivity of the recorded matter. It is also possible to improve the reliability of the resulting recorded matter. In the transfer step, the intermediate transfer medium to which the inkjet recording ink has been applied is heated in a state in which the intermediate transfer medium faces the recording target. It is preferable to heat the intermediate transfer medium to which the inkjet recording ink has been applied in a state in which the intermediate transfer medium comes in close contact with (adheres to) the recording target. In this case, it is possible to reduce the amount of energy required for transfer, and further improve the productivity of the recorded matter. It is also possible to improve the reliability of the resulting recorded matter.

The recording target is not particularly limited. For example, a sheet-like product such as a fabric cloth (e.g., hydrophobic fiber fabric cloth), a resin (plastic) film, or paper is suitably used as the recording target. Note that a product having a solid shape (e.g., spherical shape or rectangular parallelepiped shape) may also be used as the recording target. The recording target may be formed of a resin, a plastic, paper, glass, a metal, a ceramic, or the like.

Examples of the fibers that may be used as the material for forming the recording target include polyester fibers, nylon fibers, triacetate fibers, diacetate fibers, polyamide fibers, a mixture of two or more fibers among these fibers, and the like. A mixture of these fibers and regenerated fibers (e.g., rayon) or natural fibers (e.g., cotton, silk, or wool) may also be used. Examples of the resin (plastic) film that may be used as the recording target include a polyester film, a polyurethane film, a polycarbonate film, a polyphenylene sulfide film, a polyimide film, a polyamide-imide film, and the like. The resin (plastic) film may be a laminate in which a plurality of layers are stacked, or may be formed of a gradient material that gradually changes in composition.

### Recorded matter

A recorded matter according to one embodiment of the invention is described below. The recorded matter according to one embodiment of the invention is produced using the inkjet recording ink according to one embodiment of the invention (see above). It is thus possible to provide a highly reliable recorded matter using a sublimation transfer technique. The recorded matter according to one embodiment of the invention may be used for an arbitrary application. Examples of the application of the recorded matter according to one embodiment of the invention include clothing (e.g., T-shirt and sweat suit), a banner, and the like. The embodiments of the invention have been described above. Note that the invention is not limited to the above embodiments.

Although an example has been described above in which the recorded matter according to one embodiment of the invention is produced using the method that includes the ink application step that applies the inkjet recording ink according to one embodiment of the invention to the intermediate transfer medium using the inkjet recording device, and the transfer step that heats the intermediate transfer medium to which the inkjet recording ink has been applied in a state in which the intermediate transfer medium faces the recording target to transfer the sublimation dye included in the inkjet recording ink to the recording target, the recorded matter according to one embodiment of the invention may be produced using another method. For example, the recorded matter according to one embodiment of the invention may be produced using a method that applies the inkjet recording ink according to one embodiment of the invention to an ink-receiving layer that is removably provided to the recording target (e.g., film product), heats the recording target to effect sublimation-diffusion dyeing, and removes the ink-receiving layer.

The invention is not limited to the above embodiments. Various modifications and variations may be made of the above embodiments. For example, the invention includes various other configurations substantially the same as the configurations described in connection with the above embodiments (e.g., a configuration having the same function, method, and results, or a configuration having the same objective and results). The invention also includes a configuration in which an unsubstantial element (part) described in connection with the above embodiments is replaced by another element (part). The invention also includes a configuration having the same effects as those of the configurations described in connection with the above embodiments, or a configuration capable of achieving the same objective as that of the configurations described in connection with the above embodiments. The invention further includes a configuration in which a known technique is added to the configurations described in connection with the above embodiments. The embodiments of the invention may also suitably be used for sublimation transfer that does not utilize an intermediate transfer medium, for example. Specifically, the inkjet recording ink is applied directly to a fabric cloth using an inkjet method, followed by heating to obtain a printed product. In this case, an excellent smoke suppression effect is also achieved.

### EXAMPLES

### [1] Production of inkjet recording ink

An inkjet recording ink was produced as described below.

### (Example 1)

A mixture including C.I. Disperse Red 60 (disperse dye), a sodium lignosulfonate-formalin condensate ("PEARLLEX DP" manufactured by Nippon Paper Chemicals Co., Ltd.) (anionic surfactant), a silicon-based surfactant ("BYK-348" manufactured by BYK Japan KK), a nonionic surfactant ("NIKKOL (registered trademark) BPS-30" manufactured by Nikko Chemicals Co., Ltd.), and ion-exchanged water, was subjected to a dispersion treatment for about 15 hours with cooling using a sand mill and glass beads having a diameter of 0.2 mm. After completion of the dispersion treatment, the dispersion was diluted with ion-exchanged water, and filtered through a glass fiber filter paper ("GC-50" manufactured buy Toyo Roshi Kaisha, Ltd., pore size: 0.5 micrometers) to obtain an aqueous dispersion from which a component having large particle size had been removed. The resulting aqueous dispersion, glycerol, triethanolamine, and ion-exchanged water were mixed in a predetermined ratio to obtain an inkjet recording ink.

### (Examples 2 to 6 and Comparative Examples 1 to 5)

An inkjet recording ink was produced in the same manner as in Example 1, except that the types and the amounts of the components used to produce the inkjet recording ink were changed as shown in Table 1. Table 1 shows the composition of the inkjet recording inks of the examples and the comparative examples, and the like.

In Table 1, "DR60" refers to C.I. Disperse Red 60 (disperse dye), "DP" refers to PEARLLEX DP (anionic surfactant), "W-40" refers to a sodium naphthalenesulfonate-formalin condensate ("LAVELIN W-40" manufactured by Dai-ichi Kogyo Seiyaku Co., Ltd.) (anionic surfactant), "S-30" refers to a nonionic surfactant, "BYK-348" refers to a silicon-based surfactant, "GL" refers to glycerol, and "TEA" refers to triethanolamine.

The surface tension (at 25°C) of the inkjet recording inks of the examples (measured in accordance with JIS K 3362 using a surface tensiometer ("CBVP-A3" manufactured by Kyowa Interface Science Co., Ltd.)) was 25 to 40 mN/m. The viscosity (at 25°C) of the inkjet recording inks of the examples (measured in accordance with JIS Z 8809 using a vibrating viscometer) was 2 to 20 mPa·s.

**TABLE 1**

| | Example 1 | Example 2 | Example 3 | Example 4 | Example 5 | Example 6 | Comparative Example 1 | Comparative Example 2 | Comparative Example 3 | Comparative Example 4 | Comparative Example 5 |
|---|---|---|---|---|---|---|---|---|---|---|---|
| DR60 X (mass%) | 7 | 7 | 7 | 7 | 7 | 7 | 7 | 7 | 7 | 7 | 7 |
| DP Y (mass%) | 5.25 | 7 | 8.75 | - | - | - | 3.5 | - | - | - | - |
| W-40 (mass%) | - | - | - | 5.25 | 7 | 8.75 | - | 3.5 | - | - | - |
| S-30 (mass%) | - | - | - | - | - | - | - | - | 5.25 | 7 | 8.75 |
| GL (mass%) | 18 | 18 | 18 | 18 | 18 | 18 | 18 | 18 | 18 | 18 | 18 |
| BYK-348 (mass%) | 0.5 | 0.5 | 0.5 | 0.5 | 0.5 | 0.5 | 0.5 | 0.5 | 0.5 | 0.5 | 0.5 |
| TEA (mass%) | 0.4 | 0.4 | 0.4 | 0.4 | 0.4 | 0.4 | 0.4 | 0.4 | 0.4 | 0.4 | 0.4 |
| Water (mass%) | 68.85 | 67.1 | 65.35 | 68.85 | 67.1 | 65.35 | 70.6 | 70.6 | 68.85 | 67.1 | 65.35 |
| Total (mass%) | 100 | 100 | 100 | 100 | 100 | 100 | 100 | 100 | 100 | 100 | 100 |
| Y/X | 0.75 | 1.00 | 1.25 | 0.75 | 1.00 | 1.25 | 0.5 | 0.5 | - | - | - |

### [2] Ejection stability (anti-clogging properties) of inkjet recording ink

The inkjet recording ink (inkjet recording inks of Examples 1 to 6 and Comparative Examples 1 to 5) was subjected to the following test, and evaluated. An inkjet recording device (see FIG. 1) was installed in a chamber (thermal chamber), and the inkjet recording ink was provided.

The inkjet recording device was continuously operated for 30 minutes (print resolution: 720×720 dpi, monochrome solid printing, print width: 1200 mm) (print test). The inkjet recording device was then allowed to stand for 48 hours. After completion of a normal cleaning operation, the print test was performed again under the same conditions, and the ejection stability of the inkjet recording ink was evaluated in accordance with the following standard. Note that the suction-side valve disc (222) and the ejection-side check valve (227) of the inkjet recording device (10) were formed using a silicone rubber having a solubility parameter at 25°C of 7.3.

A: Normal printing could be performed when the cleaning operation was performed up to three times.

B: Normal printing could be performed (clogging was eliminated) when the cleaning operation was performed four times or more, but less than 10 times.

C: Clogging was not eliminated even when the cleaning operation was performed 10 times or more.

### [3] Evaluation of storage stability

The inkjet recording ink (inkjet recording inks of Examples 1 to 6 and Comparative Examples 1 to 5) was put in a glass bottle (20 mL) with a lid, and allowed to stand at 60°C for 5 days. The surface of the ink was observed with the naked eye to determine the presence or absence of a suspended matter. The inkjet recording ink was filtered through a filter having a pore size of 10 micrometers to determine the presence or absence of a residue on the filter. The storage stability of the inkjet recording ink was evaluated in accordance with the following standard.
A: A suspended matter derived from the ink component was not observed, and no residue was observed.
B: A suspended matter derived from the ink component was observed, but no residue was observed (practical level).
C: A residue was observed.

### [4] Production of dyed product

A recorded matter (dyed product) was produced as described below using the inkjet recording ink (inkjet recording inks of Examples 1 to 6 and Comparative Examples 1 to 5). The inkjet recording device illustrated in FIG. 1 was provided with the inkjet recording ink. Paper provided with an ink-receiving layer that was formed using a material including silica was provided as an intermediate transfer medium. The inkjet recording ink was ejected onto the ink-receiving layer of the intermediate transfer medium in a predetermined pattern (ink application step). The ink-receiving layer of the intermediate transfer medium to which the inkjet recording ink was applied was brought into contact with a fabric cloth (dyeing target) formed of polyester fibers, and heated at 200°C for 60 seconds using a heat press ("TP-608M" manufactured by Taiyoseiki Co., Ltd.) to effect sublimation transfer (transfer step). A recorded matter was thus obtained.

### [5] Evaluation of external appearance

The recorded matter produced as described above (see [4]) was observed with the naked eye, and the dyed part was evaluated in accordance with the following standard.
A: The dyed part was formed in conformity with the predetermined pattern.
B: A difference from the predetermined pattern (color bleeding due to blurring, or a shift in characters or ruled lines) was observed.

The results are shown in Table 2.

**TABLE 2**

| | Ejection stability | Storage stability | External appearance of recorded matter |
|---|---|---|---|
| Example 1 | B | B | A |
| Example 2 | A | A | A |
| Example 3 | A | A | A |
| Example 4 | B | B | A |
| Example 5 | A | A | A |
| Example 6 | A | A | A |
| Comparative Example 1 | C | C | B |
| Comparative Example 2 | C | C | B |
| Comparative Example 3 | B | C | B |
| Comparative Example 4 | A | C | B |
| Comparative Example 5 | A | C | B |

As is clear from the results shown in Table 2, the inkjet recording inks of Examples 1 to 6 exhibited excellent storage stability and excellent droplet ejection stability. Moreover, the desired dyed part could be reliably formed (i.e., the reliability of the recorded matter was high). On the other hand, satisfactory results were not obtained when using the inkjet recording inks of Comparative Examples 1 to 5.

### REFERENCE SIGNS LIST

10: inkjet recording device, 100: ink cartridge, 101: ink-holding section, 200: ink supply device, 210: cartridge connection section, 211: hollow needle, 220: flow channel pump section, 221: suction-side check valve, 222: suction-side valve disc, 224: pump, 225: diaphragm, 226: spring, 227: ejection-side check valve, 228: ejection-side valve disc, 230: decompression pump section, 240: filter section, 250: valve unit, 250b: valve disc, 250s: rod section, 260: decompression-degassing section, 261: air chamber, 261a: air communication hole, 262: pressure chamber, 263: degassing chamber, 263f: filter, 264: negative pressure chamber, 265: decompression chamber, 266: partition wall, 267: flow channel valve, 267s: rod section, 268: partition wall, 270: tube, 300: carriage, 400: recording head, 402: nozzle plate, 404: ink discharge tube

## Claims

1. Use of an inkjet recording ink, wherein the inkjet recording ink is used for an inkjet recording device that includes a silicone rubber having a solubility parameter at 25°C of 6 to 8 as a member with which an ink comes in contact, the inkjet recording ink comprising:
water;
a disperse dye; and
an anionic surfactant,
a content X (mass%) of the disperse dye and a content Y (mass%) of the anionic surfactant in the inkjet recording ink satisfying a relationship "Y/X≥0.7".

2. Use of the inkjet recording ink as defined in claim 1, the content X (mass%) of the disperse dye and the content Y (mass%) of the anionic surfactant in the inkjet recording ink satisfying a relationship "Y/X≥1.0".

3. Use of the inkjet recording ink as defined in claim 1 or 2, the anionic surfactant being an aromatic sulfonic acid-formalin condensate.

4. Use of the inkjet recording ink as defined in any one of claims 1 to 3, further comprising a silicon-based surfactant.

5. Use of the inkjet recording ink as defined in any one of claims 1 to 4, the content of the disperse dye in the inkjet recording ink being 1 to 15 mass%.

6. Use of the inkjet recording ink as defined in any one of claims 1 to 5, the content of the anionic surfactant in the inkjet recording ink being 1 to 45 mass%.

7. Use of the inkjet recording ink as defined in any one of claims 1 to 6, further comprising a silicon-based surfactant, a content of the silicon-based surfactant in the inkjet recording ink being 0.1 to 5 mass%.

8. Use of the inkjet recording ink as defined in any one of claims 1 to 7, the disperse dye having a solubility parameter at 25°C of 7.5 to 10.5.

9. Use of the inkjet recording ink as defined in any one of claims 1 to 8, the disperse dye having a vaporization rate of 1x10⁻⁴ g/m² -sec or more when heated to 200°C in air.

## Patentansprüche

1. Verwendung einer Tintenstrahlaufzeichnungstinte, wobei die Tintenstrahlaufzeichnungstinte für eine Tintenstrahlaufzeichnungsvorrichtung verwendet wird, die einen Silikongummi enthält, das einen Löslichkeitsparameter bei 25 °C von 6 bis 8 als ein Element aufweist, mit dem eine Tinte in Kontakt kommt, wobei die Tintenstrahlaufzeichnungstinte umfasst:
Wasser;
einen Dispersionsfarbstoff; und
ein anionisches Tensid,
wobei ein Anteil X (Massen-%) des Dispersionsfarbstoffs und ein Anteil Y (Massen-%) des anionischen Tensids in der Tintenstrahlaufzeichnungstinte ein Verhältnis von "Y/X≥0,7" erfüllt.

2. Verwendung der Tintenstrahlaufzeichnungstinte nach Anspruch 1, wobei der Anteil X (Massen-%) des Dispersionsfarbstoffs und der Anteil Y (Massen-%) des anionischen Tensids in der Tintenstrahlaufzeichnungstinte ein Verhältnis von "Y/X≥1,0" erfüllt.

3. Verwendung der Tintenstrahlaufzeichnungstinte nach Anspruch 1 oder 2, wobei das anionische Tensid ein aromatisches Sulfonsäure-Formalin-Kondensat ist.

4. Verwendung der Tintenstrahlaufzeichnungstinte nach einem der Ansprüche 1 bis 3, ferner umfassend ein Tensid auf Siliziumbasis.

5. Verwendung der Tintenstrahlaufzeichnungstinte nach einem der Ansprüche 1 bis 4, wobei der Anteil des Dispersionsfarbstoffs in der Tintenstrahlaufzeichnungstinte 1 bis 15 Massen-% beträgt.

6. Verwendung der Tintenstrahlaufzeichnungstinte nach einem der Ansprüche 1 bis 5, wobei der Anteil des anionischen Tensids in der Tintenstrahlaufzeichnungstinte 1 bis 45 Massen-% beträgt.

7. Verwendung der Tintenstrahlaufzeichnungstinte nach einem der Ansprüche 1 bis 6, ferner umfassend ein Tensid auf Siliziumbasis, wobei ein Anteil des Tensids auf Siliziumbasis in der Tintenstrahlaufzeichnungstinte 0,1 bis 5 Massen-% beträgt.

8. Verwendung der Tintenstrahlaufzeichnungstinte nach einem der Ansprüche 1 bis 7, wobei der Dispersionsfarbstoff einen Löslichkeitsparameter bei 25 °C von 7,5 bis 10,5 aufweist.

9. Verwendung der Tintenstrahlaufzeichnungstinte nach einem der Ansprüche 1 bis 8, wobei der Dispersionsfarbstoff eine Verdampfungsrate von 1x10⁻⁴g/m²-sec oder mehr aufweist, wenn er auf 200 °C in Luft erhitzt wird.

## Revendications

1. Utilisation d'une encre d'enregistrement à jet d'encre, dans laquelle l'encre d'enregistrement à jet d'encre est utilisée pour un dispositif d'enregistrement à jet d'encre qui comprend un caoutchouc de silicone ayant un paramètre de solubilité à 25°C de 6 à 8 en tant qu'élément avec lequel une encre entre en contact, l'encre d'enregistrement à jet d'encre comprenant :
de l'eau ;
un colorant dispersé ; et
un tensioactif anionique,
une teneur X (% en masse) du colorant dispersé et une teneur Y (% en masse) du tensioactif anionique dans l'encre d'enregistrement à jet d'encre satisfaisant à une relation « Y/X ≥ 0,7 ».

2. Utilisation de l'encre d'enregistrement à jet d'encre telle que définie par la revendication 1, la teneur X (% en masse) du colorant dispersé et la teneur Y (% en masse) du tensioactif anionique dans l'encre d'enregistrement à jet d'encre satisfaisant à la relation « Y/X ≥ 1,0».

3. Utilisation de l'encre d'enregistrement à jet d'encre telle que définie par la revendication 1 ou 2, le tensioactif anionique étant un condensat d'acide sulfonique aromatique-formaline.

4. Utilisation de l'encre d'enregistrement à jet d'encre telle que définie par l'une quelconque des revendications 1 à 3, comprenant en outre un tensioactif à base de silicium.

5. Utilisation de l'encre d'enregistrement à jet d'encre telle que définie par l'une quelconque des revendications 1 à 4, la teneur du colorant dispersé dans l'encre d'enregistrement à jet d'encre étant de 1 à 15% en masse.

6. Utilisation de l'encre d'enregistrement à jet d'encre telle que définie par l'une quelconque des revendications 1 à 5, la teneur du tensioactif anionique dans l'encre d'enregistrement à jet d'encre étant de 1 à 45% en masse.

7. Utilisation de l'encre d'enregistrement à jet d'encre telle que définie par l'une quelconque des revendications 1 à 6, comprenant en outre un tensioactif à base de silicium, une teneur du tensioactif à base de silicium dans l'encre d'enregistrement à jet d'encre étant de 0,1 à 5% en masse.

8. Utilisation de l'encre d'enregistrement à jet d'encre telle que définie par l'une quelconque des revendications 1 à 7, le colorant dispersé ayant un paramètre de solubilité à 25°C de 7,5 à 10,5.

9. Utilisation de l'encre d'enregistrement à jet d'encre telle que définie par l'une quelconque des revendications 1 à 8, le colorant dispersé ayant une vitesse d'évaporation de 1x10⁻⁴ g/m²-sec ou plus lorsque chauffé à 200°C dans de l'air.
